# EUROPÄISCHE PATENTSCHRIFT

(11) **EP 0 416 339 B1**
(45) Veröffentlichungstag und Bekanntmachung des Hinweises auf die Patenterteilung: **12.01.1994**
(21) Anmeldenummer: 90115658.8
(22) Anmeldetag: 16.08.1990
(51) Int. Cl.: F16K 31/10, F16K 31/126, F16K 31/06

(54) **Eigenmediumbetätigtes durch einen Magnetanker gesteuertes Servoventil**
Magnet armature controlled servo valve activated by self agent
Servo-soupape commandée par une armature activée par un propre moyen

(30) Priorität: 06.09.1989 DE 3929551
(43) Veröffentlichungstag der Anmeldung: 13.03.1991
(73) Patentinhaber: A. und K. Müller GmbH & Co. KG, D-40593 Düsseldorf (DE)
(72) Erfinder: Moldenhauer, Hermann, D-4000 Düsseldorf 12 (DE)
(74) Vertreter: Feder, Wolf-Dietrich, Dr. Dipl.-Phys.

(56) Entgegenhaltungen:
- AT-B- 279 287
- AT-B- 296 708
- DE-A- 2 527 748
- DE-A- 3 317 056
- DE-A- 3 738 853
- DE-B- 1 750 470
- US-A- 3 407 845
- US-A- 3 446 471
- US-A- 4 295 631

## Beschreibung

Die Erfindung betrifft ein eigenmediumbetätigtes, durch einen Magnetanker gesteuertes Servoventil mit den Merkmalen aus dem Oberbegriff des Patentanspruchs 1.

Ein derartiges Servoventil ist beispielsweise in der US-A- 4 295 631 beschrieben.

Bei diesem bekannten Ventil steht der Differentialkolben unter der Einwirkung einer in Schließrichtung des Ventiltellers wirksamen Druckfeder, was zur Folge hat, daß das Servoventil einen bestimmten Mindestdruck des Mediums benötigt, um sicher zu öffnen.

Derartige Servoventile finden Verwendung bei unterschiedlichen hydraulischen und pneumatischen Einrichtungen und funktionieren in der Weise, daß das durch den Einlaß unter Druck zuströmende Medium über den Druckraum und die Steuerbohrung in die Steuerkammer gelangt. Die Flächenverhältnisse am Differentialkolben sind so gewählt, daß bei durch die Magnetankerdichtung verschlossener Entlastungsbohrung der Differentialkolben unter dem Druck des Mediums in der Steuerkammer in Richtung auf den Ventilsitz bewegt wird und sich das Ventil durch Aufsetzen des Ventiltellers auf den Ventilsitz schließt. Bei erregter Magnetspule zieht der Magnetanker an und die Entlastungsbohrung wird geöffnet. Es tritt ein Druckausgleich zwischen der Steuerkammer und dem Ventilauslaß ein und der Differentialkolben hebt sich aufgrund des im Druckraum anstehenden Druckes, so daß sich das Ventil öffnet. Beim Entregen der Magnetspule wird der Magnetanker unter der Wirkung des ersten Federelementes so bewegt, daß die Entlastungsbohrung wieder verschlossen wird und der Ventilteller schließt unter der Kraftwirkung des ersten Federelementes und dem anstehenden Mediumsdruck.

Derartige Servoventile haben die Eigenschaft, daß sie einen bestimmten Mindestdruck des Mediums benötigen um sicher zu öffnen und um definiert und reproduzierbar zu schließen.

Wird der Druck unter diesen minimalen Wert abgesenkt, dann öffnet das Ventil nicht und nur über die Entlastungsbohrung wird ein kleiner Mediumsstrom freigegeben.

Es ist bekannt, unter diesen Einsatzbedingungen funktionierende Servoventile mit einer Zwangssteuerung zu versehen derart, daß der Magnetanker mit dem Differentialkolben über eine Verbindungsvorrichtung verbunden ist, durch welche bei Erregen der Magnetspule und dem Anziehen des Magnetankers nach dem Öffnen der Entlastungsbohrung durch die Magnetankerdichtung und einem vorgegebenen Leerhub eine Zwangsanhebung des Differentialkolbens und damit des Ventiltellers vom Ventilsitz erfolgt. Dies bedeutet, daß bei sehr niedrigem Mediumsdruck der Ventilteller allein durch die Kraftwirkung der erregten Magnetspule auf den Magnetanker in die Öffnungsstellung gebracht wird.

Servoventile dieser Bauart haben den Nachteil, daß bei großen Ventilen das steuernde Magnetsystem sehr viel Leistung benötigt, um die Öffnung des Ventils zu bewirken und aufrechtzuerhalten, während bei kleinen Ventilen das bekannte Konstruktionsprinzip zu umständlichen und raumintensiven Konstruktionen führt.

Der Erfindung liegt die Aufgabe zugrunde, ein Servoventil mit den Merkmalen aus dem Oberbegriff des Patentanspruchs 1 so auszubilden, daß es ohne größeren konstruktiven Aufwand und ohne zusätzliche elektrische Leistung auch bei sehr kleinem Mediumsdruck sicher öffnet und definiert und reproduzierbar schließt.

Die Lösung dieser Aufgabe geschieht erfindungsgemäß mit den Merkmalen aus dem kennzeichnenden Teil des Patentanspruchs 1. Vorteilhafte Weiterbildungen der Erfindung sind in den Unteransprüchen beschrieben.

Der Grundgedanke der Erfindung besteht darin, das Öffnen des Ventiltellers nicht durch Zwangsankoppelung an den Magnetanker zu erzwingen, sondern durch die Membran, die als zweites in Öffnungsrichtung wirksames Federelement dient. Da diese Membran im entregten Zustand der Magnetspule dem ersten Federelement entgegenwirkt, muß sie so dimensioniert sein, daß ihre Kraftwirkung geringer ist als die des ersten Federelementes, damit im entregten Zustand ein sicheres Schließen des Ventils gewährleistet ist.

Als Membran kann dabei beispielsweise eine Rollmembran dienen, wie sie bei derartigen Servoventilen in bekannter Weise vorgesehen ist und durch die der Druckraum gegen den Steuerraum abgeschlossen ist, was dadurch erreicht wird, daß der Außenrand der Membran dichtend am Ventilgehäuse und der Innenrand der Membran dichtend mit dem Differentialkolben verbunden ist, wobei in vielen Fällen die Membran einstückig mit dem Ventilteller verbunden ist. Diese Membran wird abweichend von der üblichen Praxis so ausgestaltet und im Ventilgehäuse angeordnet, daß sie in ihrer entspannten Ruhestellung den Ventilteller in der geöffneten Stellung festhält. Eine derartige Ausbildung der Membran kann bei einer Gummimembran derart erzielt werden, daß die Vulkanisation der Membran in einer Stellung erfolgt, die im eingebauten und mit dem Ventilteller verbundenen Zustand der Öffnungsstellung des Ventiltellers entspricht. Wie weiter unten anhand eines Ausführungsbeispiels näher erläutert, hat dies zur Folge, daß der Ventilteller durch die elastische Wirkung der Membran eine Kraftwirkung in Öffnungsrichtung erfährt, die Membran selbst also als Federelement wirkt, daß den Ventilteller in die Öffnungsstellung bringt und ihn dort festhält. Eine zusätzliche Schraubendruckfeder ist dann nicht erforderlich und die durch die Membran erzeugte Kraftwirkung kann leicht so bemessen werden, daß sie kleiner ist als die Kraftwirkung einer Feder, die den Magnetanker im entregten Zustand der Magnetspule in die Stellung zurückführt, in welcher der Ventilteller auf den Ventilsitz gedrückt wird.

Im Folgenden wird anhand der beigefügten Zeichnungen ein Ausführungsbeispiel für ein Servoventil nach der Erfindung näher erläutert.

In den Zeichnungen zeigen:
- Fig. 1: einen Schnitt in Durchflußrichtung durch ein eigenmediumbetätigtes, durch Magnetanker gesteuertes Servoventil im geschlossenen Zustand;
- Fig. 2: in einer Darstellung analog Fig. 1 das Ventil nach Fig. 1 im geöffneten Zustand;
- Fig. 3: in einer gegenüber Fig. 1 und 2 vergrößerten Teildarstellung im Schnitt den Ventilteller des Ventils nach Fig. 1 und 2 im geöffneten und geschlossenen Zustand.

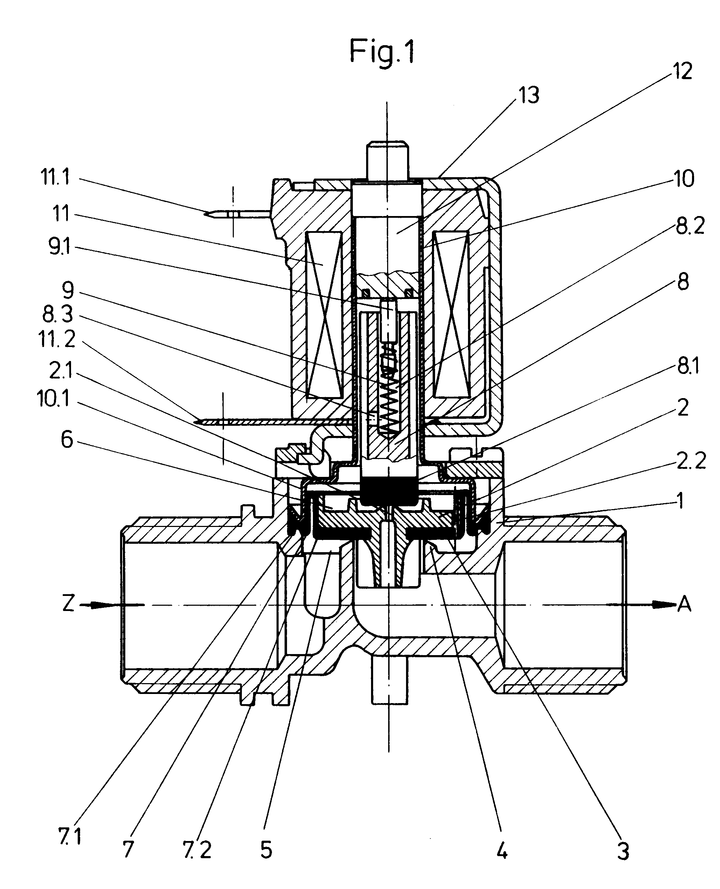

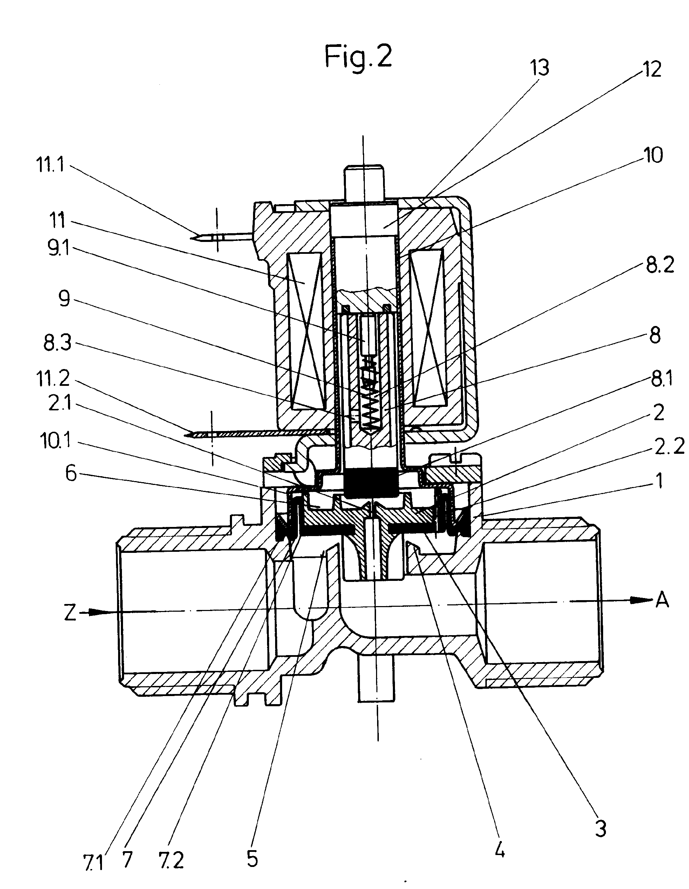

Das in Fig. 1 und 2 dargestellte Servoventil besitzt ein Ventilgehäuse 1, an dem ein Einlaß Z und ein Auslaß A angeordnet sind. Im Ventilgehäuse 1 ist ein Differentialkolben 2 bewegbar angeordnet, der einen Ventilteller 3 trägt, welcher einstückig integriert ist in eine Rollmembran 7, deren äußerer Rand 7.1 dichtend mit dem Ventilgehäuse 1 verbunden ist, während ihr innerer Rand 7.2 mit dem Ventilteller 3 und damit dem Differentialkolben 2 verbunden ist. Die Rollmembran 7 trennt einen an der einen Seite des Differentialkolbens 2 angeordneten Druckraum 5, der mit dem Ventileinlaß Z verbunden ist, von einem an der anderen Seite des Differentialkolbens angeordneten Steuerraum 6, der über eine mittig im Differentialkolben angeordnete Entlastungsbohrung 2.1 mit dem Ventilauslaß A und über eine außermittig im Differentialkolben 2 angeordnete Steuerbohrung 2.2 mit dem Druckraum 5 verbunden ist. Der Druckraum 5 ist über den dem Ventilteller 3 gegenüberliegenden Ventilsitz 4 bei geöffnetem Ventil mit dem Auslaß A verbunden.

An der in Fig. 1 und 2 oberen Seite des Ventilgehäuses ist ein Magnetsystem zur Steuerung des Ventils angeordnet mit einer Magnetspule 11, in der ein Führungsrohr 10 angeordnet ist, dessen erweitertes, dem Ventilgehäuse 1 zugewandtes Ende 10.1 zusammen mit der einen Seite des Differentialkolbens 2 und der Rollmembran 7 die Begrenzung des Steuerraums 6 darstellt. Im Führungsrohr 10 ist der Magnetanker 8 geführt, an dessen dem Differentialkolben 2 zugewandten Ende eine Magnetankerdichtung 8.1 angeordnet ist, die der Entlastungsbohrung 2.1 im Differentialkolben 2 gegenüberliegt. Im Magnetanker 8 ist eine Axialbohrung 8.2 angeordnet, in der eine als Rückstellfeder wirkende Schraubenfeder 9 angeordnet ist, die sich mit ihrem einen Ende am Boden der axialen Bohrung 8.2 und mit ihrem anderen Ende über ein Anschlagelement 9.1 an einem festen Kopfstück 12 im Führungsrohr 10 gegenüber dem anderen Ende des Magnetankers 8 abstützt. Zum Druckausgleich in der axialen Bohrung 8.2 dient eine Radialbohrung 8.3.

Der Magnetspule 11 wird über Anschlüsse 11.1 und 11.2 der zur Erregung nötige elektrische Strom zugeführt. Die Magnetspule 11 wird in üblicher Weise von einem Magnetjoch 13 umfaßt.

In dem in Fig. 1 dargestellten entregten Zustand der Magnetspule 11 wird der Magnetanker 8 unter der Wirkung der Schraubenfeder 9 nach unten aus der Spule herausgedrückt, wodurch einerseits mittels der Magnetankerdichtung 8.1 die Entlastungsbohrung 2.1 verschlossen wird und andererseits der Differentialkolben 2 nach unten gedrückt wird, so daß der Ventilteller 3 auf dem Ventilsitz 4 aufsitzt.

Bei ausreichendem Mediumsdruck von der Zuflußseite Z her wirkt dieser durch die Steuerbohrung 2.2 in den Druckraum 6 hinein, so daß die Schließstellung durch den Mediumsdruck unterstützt wird.

Bei Erregung der Magnetspule 11 wird der Magnetanker 8, wie in Fig. 2 dargestellt, angehoben und die Magnetankerdichtung 8.1 gibt die Entlastungsbohrung 2.1 frei. Es erfolgt ein Druckausgleich zwischen dem Steuerraum 6 und dem Ventilauslaß A, so daß nunmehr bei ausreichendem Mediumsdruck vom Ventileinlaß Z her der Differentialkolben 2 und damit der Ventilteller 3 durch den Mediumsdruck angehoben wird und das Ventil öffnet.

Damit dieses Öffnen auch bei sehr geringem Mediumsdruck mit Sicherheit stattfindet, steht der Differentialkolben 2 unter der Wirkung eines in Öffnungsrichtung wirkenden Federelementes, das im dargestellten Ausführungsbeispiel durch die Rollmembran 7 selbst gebildet wird. Durch dieses Federelement wird der Differentialkolben 2 bei seiner Freigabe durch den Anker 8 bzw. die Magnetankerdichtung 8.1 zwangsläufig angehoben, so daß der Ventilteller 3 vom Ventilteller 4 abhebt und das Ventil öffnet.

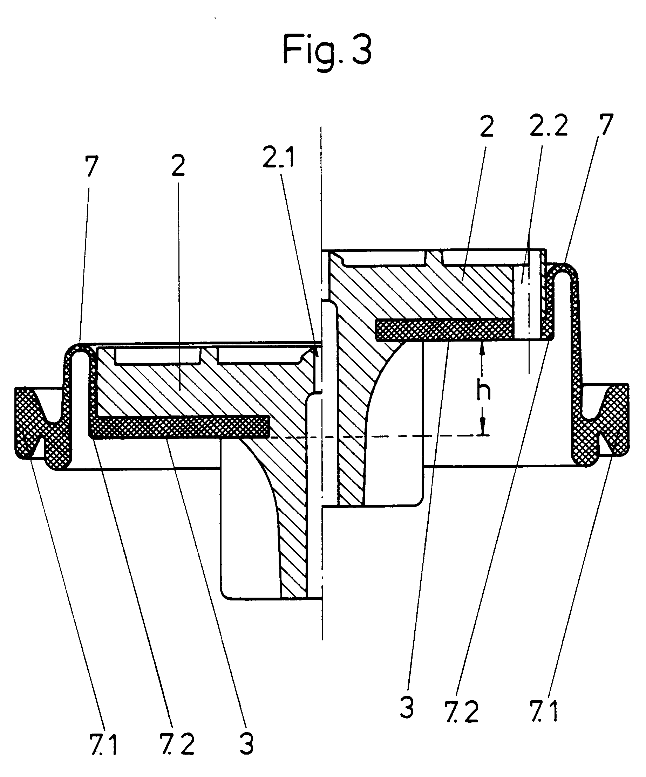

Die zu diesem Verhalten der Rollmembran 7 als Federelement führende Ausgestaltung wird im folgenden anhand von Fig. 3 näher erläutert.

Fig. 3 zeigt den Differentialkolben 2 mit dem von ihm getragenen Ventilteller 3, der einstückig mit der Rollmembran 7 verbunden ist, in der linken Hälfte in der Fig. 1 entsprechenden Schließstellung und in der rechten Hälfte in der Fig. 2 entsprechenden Öffnungsstellung, in vergrößerter Darstellung.

Rollmembranen der dargestellten Art bestehen im allgemeinen aus einem Gummimaterial, das am Abschluß seiner Herstellung einer die äußere Form fixierenden Vulkanisation unterworfen wird. Diese Vulkanisation fixiert die Ruhestellung der Membran im entspannten Zustand, in die sie zurückzukehren versucht, wenn sie aus dieser Ruhestellung ausgelenkt wird. Im allgemeinen entspricht die als Ruhestellung fixierte Stellung bei Rollmembranen einer Stellung, wie sie beispielsweise in Fig. 3 der linken Hälfte entspricht, bei der sich die beiden Ränder 7.1 und 7.2 der Rollmembran in etwa auf gleicher Höhe befinden. Diese Stellung entspricht aber im dargestellten Ausführungsbeispiel der Schließstellung des Servoventils. Abweichend von der üblichen Gestaltung ist aus diesem Grunde die Rollmembran 7 durch das Vulkanisieren in einem Ruhezustand fixiert worden, welcher der rechten Hälfte in Fig. 3 entspricht und in der die beiden Ränder 7.1 und 7.2 der Rollmebran 7 um die Höhe h auseinanderliegen. In diesem Zustand ist die Rollmembran 7 innerhalb des in Fig. 1 und 2 dargestellten Ventils so angeordnet, daß der Ventilteller 3 in einer vom Ventilsitz 4 abgehobenen Stellung festgehalten ist. Die Ruhestellung der Rollmembran 7 definiert somit die Öffnungsstellung des Ventils. Beim Schließen des Ventils wird der Differentialkolben 2 und mit ihm der Ventilteller 3 unter der Einwirkung der Schraubenfeder 9 nach unten in Richtung auf den Ventilsitz 4 gedrückt. Dadurch wird die Rollmembran 7 aus ihrer Ruhestellung (Fig. 3, rechte Hälfte) ausgelenkt und in eine Stellung gebracht (Fig. 3, linke Hälfte), in der sie unter einer vorgegebenen Spannung steht. Die durch diese Spannung erzeugte Kraftwirkung ist aber geringer als die Kraftwirkung der Schraubenfeder 9, so daß das Ventil in der in Fig. 1 bzw. Fig. 3, linke Hälfte, dargestellten Stellung schließt. Wird durch Anziehen des Magnetankers 8 die Kraftwirkung der Schraubenfedern 9 weggenommen und der Differentialkolben 2 freigegeben, so kehrt die Rollmembran 7 in ihre Ruhestellung zurück und hebt dabei den Differentialkolben 2 mit dem Ventilteller 3 um den Betrag h an und das Ventil öffnet.

Auf diese Weise ist ein Öffnen des Ventiltellers 3 unter Federkraft erreicht, ohne daß ein zusätzliches Federelement, wie beispielsweise eine Schraubenfeder, verwendet werden müßte. Eine Anbindung des Differentialkolbens 2 an den Magnetanker 8 ist ebenfalls nicht erforderlich. Das in den Fig. 1 bis 3 dargestellte Ventil öffnet auch ohne Unterstützung durch den Mediumsdruck zuverlässig.

## Patentansprüche

1. Eigenmediumbetätigtes, durch einen Magnetanker gesteuertes Servoventil, mit einem in einem Ventilgehäuse bewegbar angeordneten, den Ventilteller tragenden Differentialkolben (2), an dessen einer Seite ein mit dem Ventileinlaß (7) verbundener Druckraum (5) angeordnet ist, der über einen dem Ventilteller (3) gegenüberliegenden Ventilsitz (4) mit dem Ventilauslaß (A) verbunden ist und an dessen anderer Seite ein Steuerraum (6) angeordnet ist, der über eine mittig im Differentialkolben (2) angeordnete Entlastungsbohrung (2.1) mit dem Ventilauslaß (A) und über eine außermittig im Differentialkolben (2) angeordnete Steuerbohrung (2.2) mit dem Druckraum (5) verbunden ist, wobei die Entlastungsbohrung (2.1) durch eine am in einer Magnetspule (11) geführten Magnetanker (8) angeordnete Magnetankerdichtung (8.1) im entregten Zustand der Magnetspule durch die Kraft eines auf den Magnetanker (8) wirkenden ersten Federelements (9) verschlossen ist und im erregten Zustand der Magnetspule öffnet und der Druckraum (5) gegen den Steuerraum (6) durch eine Membran (7) abgeschlossen ist, deren Außenrand (7.1) dichtend mit dem Ventilgehäuse (1) und deren Innenrand (7.2) dichtend mit dem Differentialkolben (2) verbunden ist, dadurch gekennzeichnet, daß der Differentialkolben (2) unter der Kraftwirkung eines in Öffnungsrichtung des Ventiltellers (3) wirksamen zweiten Federelements (7) steht, dessen Kraftwirkung kleiner ist als die des ersten Federelements (9) und das durch die Membran (7) gebildet ist, durch die der Druckraum (5) gegen den Steuerraum (6) abgeschlossen ist und die so ausgestaltet und innerhalb des Ventilgehäuses (1) angeordnet ist, daß in ihrer entspannten Ruhestellung sich der Ventilteller (3) in der geöffneten Stellung befindet.

2. Servoventil nach Anspruch 1, dadurch gekennzeichnet, daß die Membran als Rollmembran (7) ausgebildet ist.

3. Servoventil nach Anspruch 1 oder 2, dadurch gekennzeichnet, daß bei einer Membran (7) aus Gummi die Ausgestaltung durch Vulkanisation der Membran in der der Öffnungsstellung des Ventiltellers entsprechenden Stellung erzeugt ist.

## Claims

1. Magnet-armature-controlled servo valve activated by its own medium, having a differential piston (2) which is movably arranged in a valve housing, bears the valve disc and on the one side of which there is arranged a pressure space (5), which is connected to the valve inlet (7) and is connected via a valve seat (4), lying opposite the valve disc (3), to the valve outlet (A) and on the other side of which there is arranged a control space (6), which is connected via a relief bore (2.1), arranged centrally in the differential piston (2), to the valve outlet (A) and via a control bore (2.2), arranged off-centrally in the differential piston (2), to the pressure space (5), in which arrangement, in the de-excited state of the magnet coil, the relief bore (2.1) is closed by a magnet armature seal (8.1), arranged on the magnet armature (8) guided in a magnet coil (11), by the force of a first spring element (9) acting on the magnet armature (8) and, in the excited state of the magnet coil, it opens and the pressure space (5) is closed off from the control space (6) by a diaphragm (7), the outer edge (7.1) of which is connected in a sealing manner to the valve housing (1) and the inner edge (7.2) of which is connected in a sealing manner to the differential piston (2), characterized in that the differential piston (2) is under the force effect of a second spring element (7), which acts in the opening direction of the valve disc (3), its force effect is less than that of the first spring element (9) and is formed by the diaphragm (7), by which the pressure space (5) is closed off from the control space (6) and which is designed and arranged inside the valve housing (1) such that, in its relaxed position of rest, the valve disc (3) is in the opened position.

2. Servo valve according to Claim 1, characterized in that the diaphragm is designed as a rolling diaphragm (7).

3. Servo valve according to Claim 1 or 2, characterized in that, in the case of a diaphragm (7) of rubber, the configuration is produced by vulcanization of the diaphragm in the position corresponding to the opening position of the valve disc.

## Revendications

1. Servovalve actionnée par le fluide et commandée par une armature d'électro-aimant comprenant un piston différentiel (2) disposé de manière mobile dans un corps de valve et portant la tête de valve, une chambre de pression (5) reliée à l'entrée de valve (7) étant disposée sur l'une des deux faces dudit piston, ladite chambre de pression étant reliée à un support d'obturation (4) situé face à la tête de valve (3) et relié à la sortie de valve (A), une chambre de commande (6) étant disposée sur l'autre face du piston, reliée à la sortie (A) par un alésage de déversement (2.1) pratiqué au centre du piston différentiel (2) et à la chambre de pression (5) par un alésage de commande (2.2) pratiqué de manière excentrique dans le piston différentiel (2), l'alésage de déversement (2.1) étant fermé par le joint d'étanchéité (8.1) de l'armature (8) guidée dans la bobine d'électro-aimant (11) et soumise, à l'état désexcité de cette bobine, à la force d'appui d'un premier élément de ressort (9) et s'ouvrant, à l'état excité de la bobine d'électro-aimant, la chambre de pression (5) étant isolée de la chambre de commande (6) par la membrane (7) dont le bord extérieur (7.1) est relié de manière étanche au corps de valve (1) et dont le bord intérieur (7.2) est relié de manière étanche au piston différentiel (2), **caractérisée en ce** **que** le piston différentiel (2) est soumis à l'effet de force d'un deuxième élément de ressort (7) dont l'action est orientée dans le sens de l'ouverture de la tête de valve (3), tout en étant inférieur à la force du premier élément de ressort (9), constitué par la membrane (7) isolant la chambre de pression (5) de la chambre de commande (6), conçue et disposée à l'intérieur du corps de valve (1) de manière que la tête de valve (3) soit en position ouverte lorsqu'elle se trouve en position de repos.

2. Servovalve selon la revendication 1, caractérisée en ce que la membrane est une membrane de rappel (7).

3. Servovalve selon la revendication 1 ou 2, caractérisée en ce que, dans le cas d'une membrane (7) en caoutchouc, la fabrication de la membrane par vulcanisation est réalisée de manière que sa position de repos corresponde à la position d'ouverture de la tête de valve.
